# EUROPÄISCHE PATENTANMELDUNG

(11) **EP 1 137 272 A2**
(43) Veröffentlichungstag der Anmeldung: **26.09.2001**
(21) Anmeldenummer: 01103982.3
(22) Anmeldetag: 19.02.2001
(51) Int. Cl.: H04N 5/32, H04N 5/235

(54) **Flächenhafter Bilddetektor für elektromagnetische Stahlen, insbesondere Röntgenstrahlen**

(30) Priorität: 02.03.2000 DE 10009954
(71) Anmelder: SIEMENS AKTIENGESELLSCHAFT, 80333 München (DE)
(72) Erfinder: Sklebitz, Hartmut, Dipl.-Ing. (FH), 91056 Erlangen (DE)

(57) **Zusammenfassung**

Die Erfindung betrifft einen flächenhaften Bilddetektor (5) für elektromagnetische Strahlen (3) zur Betrachtung eines Untersuchungsobjektes, der eine aktive Fläche auf einem Substrat (20) mit einer Matrix (12) von strahlenempfindlichen Pixelelementen zur Bildgebung aufweist, wobei unmittelbar neben der aktiven Fläche ein strahlenempfindlicher Sensor (24) zur Erzeugung von Steuersignalen für eine Belichtungssteuerung (28) innerhalb der durch das Untersuchungsobjekt (4) abgeschwächten Strahlen (3) angeordnet ist.

## Beschreibung

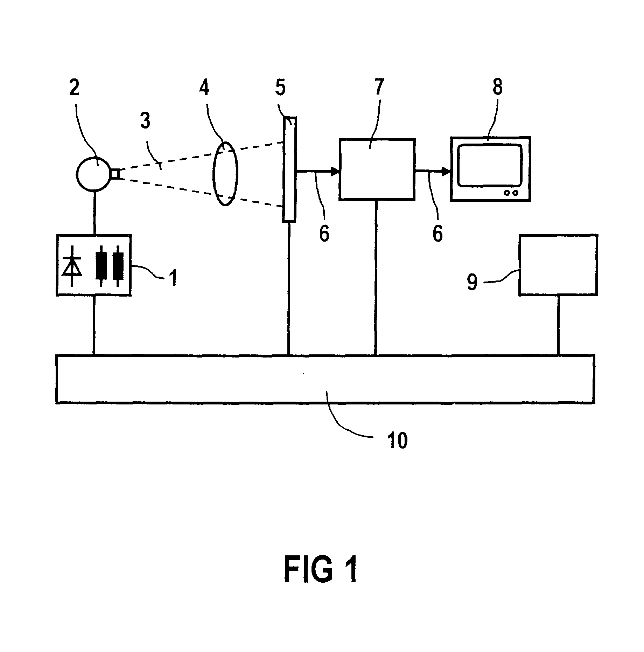

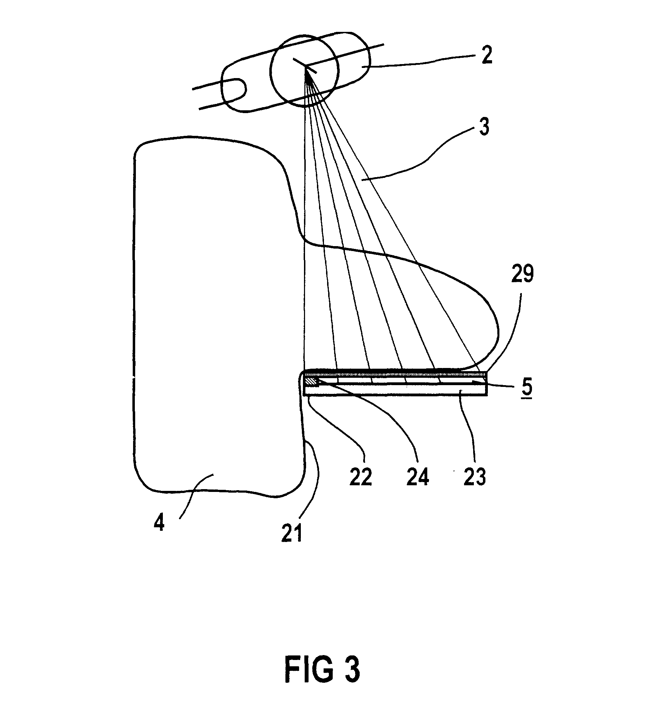

Die Erfindung betrifft einen flächenhaften Bilddetektor für elektromagnetische Strahlen zur Betrachtung eines Untersuchungsobjektes, der eine aktive Fläche auf einem Substrat mit einer Matrix von strahlenempfindlichen Pixelelementen zur Bildgebung aufweist. Derartige Bilddetektoren werden beispielsweise in Röntgendiagnostikeinrichtungen, wie sie in Figur 1 dargestellt sind, oder Röntgengeräten gemäß Figur 3 für die Mammographie eingesetzt.

In der Figur 1 ist eine aus der DE 195 27 148 C1 bekannte Röntgendiagnostikeinrichtung mit einer von einem Hochspannungsgenerator 1 mit Hoch- und Heizspannung versorgte Röntgenröhre 2 dargestellt, die eine kegelförmige Röntgenstrahlung 3 erzeugt, die einen Patienten 4 durchdringt und auf einem für Röntgenstrahlung 3 empfindlichen Röntgendetektor 5 Strahlenbilder erzeugt. Das Ausgangssignal des Röntgendetektors 5, die Bilddaten 6, wird einem Bildsystem 7 zugeführt. Das Bildsystem 7 kann Wandler, Bildspeicher und Verarbeitungsschaltungen aufweisen. Es ist zur Wiedergabe der erfassten Röntgenbilder mit einem Monitor 8 verbunden. Bedienelemente 9 sind über eine Systemsteuerung und -kommunikation 10 mit den übrigen Komponenten der Röntgendiagnostikeinrichtung verbunden.

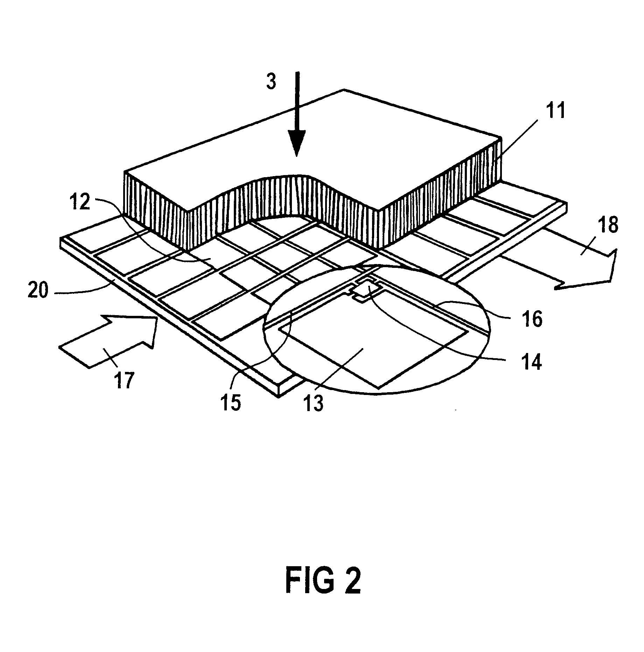

In der Figur 2 ist der Röntgendetektor 5 im perspektivischem Querschnitt dargestellt. Die Kernkomponente des Röntgendetektors 5 besteht aus einer Festkörper-Pixelmatrix, Zeilentreibern und Verstärkern. Die Festkörper-Pixelmatrix besteht z.B. aus einer Schicht mit einem Szintillator 11, beispielsweise bestehend aus Caesiumjodid (CsI), welche bei Bestrahlung durch die Röntgenstrahlung 3 sichtbare Photonen in eine Pixelmatrix 12 aus amorphem Silizium einspeist, die ein sichtbares Röntgenbild ergeben. Jeder der Pixel oder Bildpunkte dieser Pixelmatrix 12 besteht, wie in Figur 2 vergrößert dargestellt ist, aus einer Photodiode 13 und einem Schalter 14, der mit Zeilen- 15 und Spaltenleitungen 16 verbunden ist. Die Pixelmatrix 12 ist auf einem Glassubstrat 20 aufgetragen.

Es werden jeweils alle Pixel einer Zeile gleichzeitig von den Zeilentreibern 17 adressiert und ausgelesen. Die Signale werden in einer Vielzahl von Verstärkern 18 parallel verarbeitet. Ein Bild wird im einfachsten Fall Zeile für Zeile progressiv ausgelesen.

Wird ein derartiger Röntgendetektor 5 in der Mammographie eingesetzt, besteht das Problem, einen Sensor zur Belichtungssteuerung richtig zu platzieren. Da ein derartiger Sensor bei den weichen Strahlen eine zu große Abschattung bewirkt, kann er nicht, wie aus der Röntgentechnik somit allgemein bekannt, vor dem Röntgendetektor 5 angeordnet sein. Auch eine Platzierung hinter dem Röntgendetektor 5 ist nicht möglich, da der Röntgendetektor 5 eine zu große Röntgenabsorption aufweist.

Die Erfindung geht von der Aufgabe aus, einen flächenhaften Bilddetektor der eingangs genannten Art zu schaffen, bei dem ein Sensor zur Belichtungssteuerung derart angeordnet ist, so dass keine Abschattung erfolgt und die bildwirksame Fläche möglichst groß ist. Außerdem soll die Messung an einer Stelle erfolgen, an der etwa gleiche Röntgenabsorptionen wie unter dem Untersuchungsobjekt vorherrschen.

Die Aufgabe wird erfindungsgemäß dadurch gelöst, dass unmittelbar neben der aktiven Fläche von strahlenempfindlichen Pixelelementen ein strahlenempfindlicher Sensor zur Erzeugung von Steuersignalen für eine Belichtungssteuerung innerhalb der durch das Untersuchungsobjekt abgeschwächten Strahlen angeordnet ist.

Bei einem flächenhaften Bilddetektor zur Bildgebung in einem Röntgengerät für die Mammographie soll der strahlenempfindliche Sensor zentriert an einem brustwandnahen Seitenbereich, bevorzugt zwischen Bildfläche und Brustwand angeordnet sein

Erfindungsgemäß kann der strahlenempfindliche Sensor ein Photoelement aufweisen, das in der Mitte des brustwandnahen Seitenbereiches angeordnet ist. Er kann aber auch mehrere Photoelemente aufweisen, die an dem brustwandnahen Seitenbereich derart in einer Reihe verteilt angeordnet sind, dass sie innerhalb des durch das Untersuchungsobjekt abgeschatteten Bereiches liegen.

Es hat sich als vorteilhaft erwiesen, wenn an den Photoelementen des strahlenempfindlichen Sensors eine Schaltungsanordnung angeschlossen ist, die eine Auswahl der Ausgangssignale der Photoelemente bewirkt.

Dabei kann erfindungsgemäß der strahlenempfindliche Sensor parallel, senkrecht oder schräg zur Pixelmatrix angeordnet sein.

Einen einfachen Aufbau des strahlenempfindlichen Sensors erhält man, wenn die Photoelemente des strahlenempfindlichen Sensors aus einer Photodiode besteht, auf die ein Szintillator angebracht ist. Alternativ können die Photoelemente des strahlenempfindlichen Sensors aus einer Photodiode bestehen, auf die ein Photohalbleiter aufgebracht ist. Die Photodioden können aus kristallinem Silizium bestehen.

In vorteilhafter Weise kann die Schicht mit der Pixelmatrix aus kristallinem oder amorphem Silizium (aSi, aSi:H) bestehen.

Erfindungsgemäß kann vor dem strahlenempfindlichen Sensor ein Streustrahlenraster angebracht oder ein bewegtes Streustrahlenraster dem flächenhaften Bilddetektor zugeordnet sein.

Die Erfindung ist nachfolgend anhand eines in der Zeichnung dargestellten Ausführungsbeispieles näher erläutert. Es zeigen:
- Figur 1: eine bekannte Röntgendiagnostikeinrichtung mit einem Röntgendetektor,
- Figur 2: eine perspektivische Ansicht eines bekannten Röntgendetektors,
- Figur 3: ein Röntgengerät für die Mammographie mit einem erfindungsgemäßen Röntgendetektor,
- Figuren 4 bis 6: Querschnitte durch erfindungsgemäße Röntgendetektoren mit Belichtungssensoren.

In der Figur 3 ist eine erfindungsgemäße Röntgendiagnostikeinrichtung für mammographische Aufnahmen mit einem Röntgendetektor 5 dargestellt, der an der Brustwand 21 einer Patientin 4 anliegt. Im brustwandnahen Seitenbereich 22 weist der Röntgendetektor 5 vor einem Festkörperbildwandler 23 einen Belichtungssensor 24 auf, der ein Steuersignal zur Belichtungssteuerung durch die Systemsteuerung 10 erzeugt. Der Röntgendetektor 5 kann ein Streustrahlenraster 29 aufweisen, dass entweder als festes Streustrahlenraster nur den Belichtungssensor 24 oder als bewegbares Streustrahlenraster 29 vor dem Belichtungssensor 24 und dem Festkörperbildwandler 23 angeordnet ist.

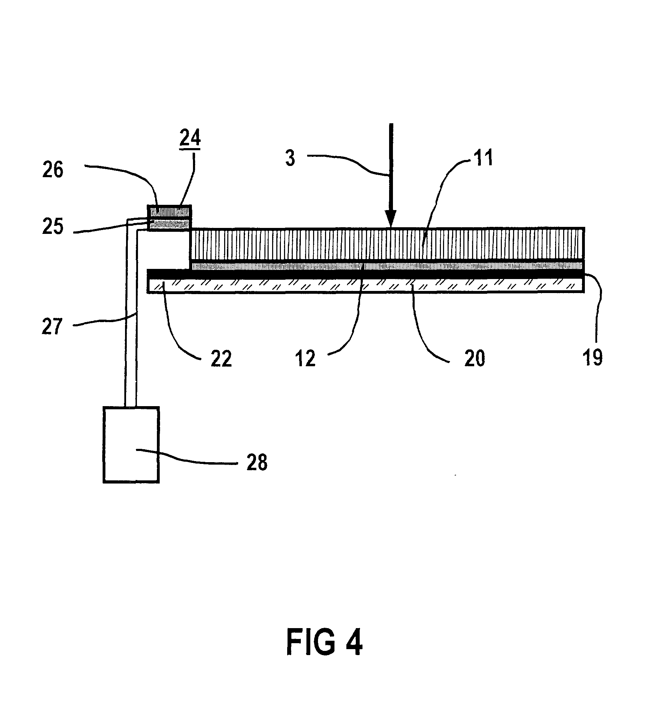

Figur 4 zeigt das Glassubstrat 20, auf dem sich die Anschlussleitungen und/oder Kontakte 19 befinden. Darüber liegt die Pixelmatrix 12, die von dem Szintillator 11 abgedeckt ist. Der brustwandnahe Seitenbereich 22 wurde dabei ausgespart. Dort wurde der Belichtungssensor 24 angeordnet, der aus wenigstens einer Photodiode 25 und einem Szintillator 26 besteht. Über Anschlussleitungen 27 ist der Belichtungssensor 24 mit einer Belichtungssteuerung 28 verbunden.

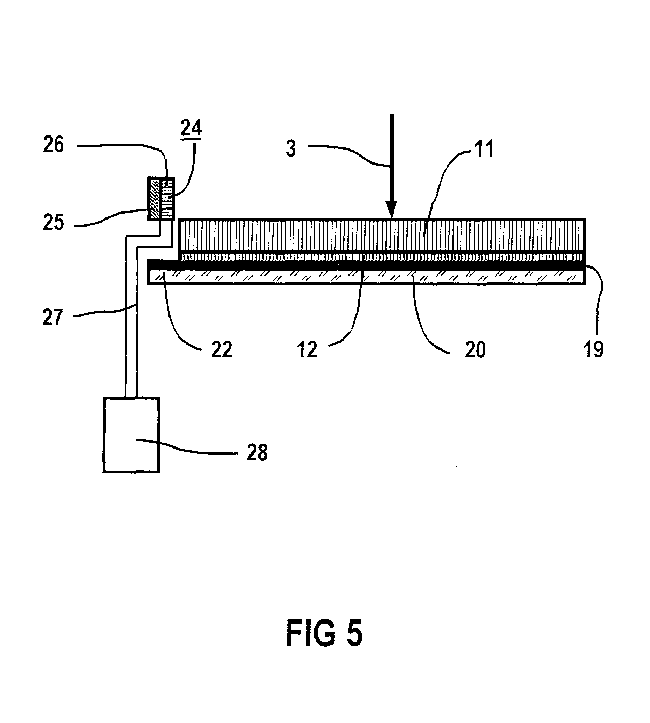

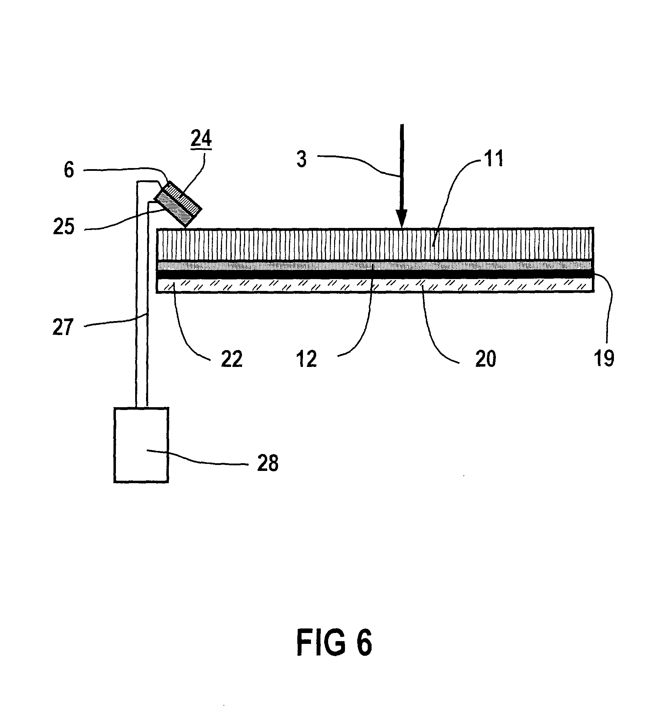

Wie in Figur 4 dargestellt kann der Belichtungssensor 24 parallel zur Pixelmatrix 12 des Festkörperbildwandlers 23 ausgerichtet sein. Erfindungsgemäß kann der Belichtungssensor 24 aber auch senkrecht (Figur 5) oder schräg zur Pixelmatrix 12 des Festkörperbildwandlers 23 (Figur 6), beispielsweise in einem Winkel von 45°, angeordnet sein.

Die Pixelmatrix 12 des Festkörperbildwandlers 23 kann aber auch, wie dies beispielsweise in Figur 6 dargestellt ist, bis zum brustwandnahen Seitenbereich 22 ausgebildet sein, so dass der Belichtungssensor 24 vor der Pixelmatrix 12 angeordnet ist, die im brustwandnahen Seitenbereich 22 jedoch zumindest im Abschattungsbereich des Belichtungssensors 24 nicht aktiv ist.

Das Prinzip kann auch bei Festkörperbildwandlern 5 eingesetzt werden, die andere Materialien oder Prinzipien verwenden. Beispielsweise kann die absorbierende Schicht aus einem Material wie amorphes Selen, Bleijodid oder Bleioxid bestehen, in welchem bei Einfall von Röntgenstrahlen und Vorhandensein eines geeigneten elektrischen Feldes direkt Ladungsträger erzeugt werden. Diese Ladungsträger werden in einer darunter befindlichen Pixelmatrix detektiert. Diese Pixelmatrix kann aus amorphem Silizium (a-Si:H) bestehen, wobei jedes Pixel im Wesentlichen aus einer Elektrode, einem Sammlungskondensator und einem Schalter besteht.

## Patentansprüche

1. Flächenhafter Bilddetektor (5) für elektromagnetische Strahlen (3) zur Betrachtung eines Untersuchungsobjektes, der eine aktive Fläche auf einem Substrat (20) mit einer Matrix (12) von strahlenempfindlichen Pixelelementen zur Bildgebung aufweist, wobei unmittelbar neben der aktiven Fläche ein strahlenempfindlicher Sensor (24) zur Erzeugung von Steuersignalen für eine Belichtungssteuerung (28) innerhalb der durch das Untersuchungsobjekt (4) abgeschwächten Strahlen (3) angeordnet ist.

2. Flächenhafter Bilddetektor (5) zur Bildgebung in einem Röntgengerät für die Mammographie nach Anspruch 1, **dadurch gekennzeichnet, dass** der strahlenempfindliche Sensor (24) zentriert an einem brustwandnahen Seitenbereich (22) angeordnet ist.

3. Flächenhafter Bilddetektor (5) nach Anspruch 1 oder 2, **dadurch gekennzeichnet, dass** der strahlenempfindliche Sensor (24) ein Photoelement aufweist, das in der Mitte des brustwandnahen Seitenbereiches (22) angeordnet ist.

4. Flächenhafter Bilddetektor (5) nach Anspruch 1 oder 2, **dadurch gekennzeichnet, dass** der strahlenempfindliche Sensor (24) Photoelemente aufweist, die an dem brustwandnahen Seitenbereich (22) derart in einer Reihe verteilt angeordnet sind, dass sie innerhalb des durch das Untersuchungsobjekt (4) abgeschatteten Bereiches liegen.

5. Flächenhafter Bilddetektor (5) nach Anspruch 4, **dadurch gekennzeichnet, dass** an den Photoelementen des strahlenempfindlichen Sensors (24) eine Schaltungsanordnung angeschlossen ist, die eine Auswahl der Ausgangssignale der Photoelemente bewirkt.

6. Flächenhafter Bilddetektor (5) nach einem der Ansprüche 1 bis 5, **dadurch gekennzeichnet, dass** die Grundfläche des strahlenempfindlichen Sensors (24) parallel zur Pixelmatrix (12) angeordnet ist.

7. Flächenhafter Bilddetektor (5) nach einem der Ansprüche 1 bis 5, **dadurch gekennzeichnet, dass** die Grundfläche des strahlenempfindlichen Sensors (24) senkrecht zur Pixelmatrix (12) angeordnet ist.

8. Flächenhafter Bilddetektor (5) nach einem der Ansprüche 1 bis 5, **dadurch gekennzeichnet, dass** die Grundfläche des strahlenempfindlichen Sensors (24) schräg zur Pixelmatrix (12) angeordnet ist.

9. Flächenhafter Bilddetektor (5) nach einem der Ansprüche 1 bis 8, **dadurch gekennzeichnet, dass** die Photoelemente des strahlenempfindlichen Sensors (24) aus einer Photodiode (25) bestehen, auf die ein Szintillator (26) aufgebracht ist.

10. Flächenhafter Bilddetektor (5) nach Anspruch 9, **dadurch gekennzeichnet, dass** die Photodiode (25) aus kristallinem Silizium besteht.

11. Flächenhafter Bilddetektor (5) nach einem der Ansprüche 1 bis 10, **dadurch gekennzeichnet, dass** die Photoelemente des strahlenempfindlichen Sensors (24) aus einer Photodiode (25) bestehen, auf die ein Photohalbleiter (26) aufgebracht ist.

12. Flächenhafter Bilddetektor (5) nach einem der Ansprüche 1 bis 11, **dadurch gekennzeichnet, dass** die Schicht mit der Pixelmatrix (12) aus amorphem Silizium (aSi, aSi:H) besteht.

13. Flächenhafter Bilddetektor (5) nach einem der Ansprüche 1 bis 11, **dadurch gekennzeichnet, dass** die Schicht mit der Pixelmatrix (12) aus kristallinem Silizium besteht.

14. Flächenhafter Bilddetektor (5) nach einem der Ansprüche 1 bis 13, **dadurch gekennzeichnet, dass** ein Streustrahlenraster (29) vor dem strahlenempfindlichen Sensor (24) angebracht ist.

15. Flächenhafter Bilddetektor (5) nach einem der Ansprüche 1 bis 14, **dadurch gekennzeichnet, dass** ein bewegtes Streustrahlenraster (29) dem flächenhaften Bilddetektor (5) zugeordnet ist.
